# FASCICULE DE BREVET EUROPEEN

(11) **EP 1 009 153 B1**
(45) Date de publication et mention de la délivrance du brevet: **10.08.2011**
(21) Numéro de dépôt: 99403105.2
(22) Date de dépôt: 10.12.1999
(51) Int. Cl.: H04M 7/00

(54) **Procédé de mise en communication de deux équipements reliés à un réseau informatique du type de l'Internet**
Verfahren zum Aufbau einer Verbindung zwischen zwei an einem Internet-typ Netzwerk angeschlossenen Vorrichtungen
Communication set-up procedure between two devices connected to an Internet type computer network

(30) Priorité: 11.12.1998 FR 9815666; 12.08.1999 FR 9910435
(43) Date de publication de la demande: 14.06.2000
(73) Titulaire: Sagem Mobiles, 75015 Paris (FR)
(72) Inventeur: Alos, Rafael, 95520 Osny (FR)
(74) Mandataire: Ribard, Carin Marie Lisa

(56) Documents cités:
- WO-A-99/12365
- PATENT ABSTRACTS OF JAPAN vol. 098, no. 005, 30 avril 1998 (1998-04-30) & JP 10 023075 A (RICOH CO LTD), 23 janvier 1998 (1998-01-23)
- FOO S ET AL: "APPROACHES FOR RESOLVING DYNAMIC IP ADDRESSING" INTERNET RESEARCH: ELECTRONIC NETWORKING APPLICATIONS AND POLICY, vol. 7, no. 3, 1 janvier 1997 (1997-01-01), pages 208-216, XP000199862

## Description

La présente invention concerne les communications sur des réseaux informatiques de transmission de données du genre de l'INTERNET, et plus particulièrement les communications en mode téléphonique, pour la transmission de la voix ou de données.

L'INTERNET permet à des terminaux du genre PC d'accéder à des serveurs de données raccordés en permanence à l'INTERNET et auxquels a été affectée une adresse IP permanente.

Les PC qui, eux, ne sont jamais appelés, n'ont pas besoin d'adresse IP permanente. Pour appeler un serveur, utilisateur du PC appelle, par le réseau téléphonique commuté, d'abord son fournisseur de services d'accès à l'INTERNET et ce dernier fournit une adresse IP provisoire, valable uniquement pour la communication avec le serveur qui va être établie. Le serveur peut ainsi adresser en retour les données demandées.

Une telle exploitation évite de gaspiller les adresses. Cependant, elle est inadaptée pour des communications vers de simples équipements terminaux tels que PC, postes téléphoniques, télécopieurs ou autres, dépourvus d'adresse IP permanente. L'appelant ne peut en effet avertir l'appelé de son appel pour que celui-ci le "rejoigne" sur l'INTERNET.

Le document « Approaches for Resolving Dynamic IP Addressing, Schubert Foo et al Internet Research : Electronic Networking Applications and Policy, vol.7, n°3, 01 janvier 1997, décrit un mécanisme dans lequel un premier dispositif connaît l'adresse e-mail d'un second dispositif et lui envoie un e-mail spécial comprenant son adresse IP. Cet e-mail spécial est reçu par un serveur SMTP, puis transmis à un serveur POP auquel le second dispositif accède par scrutation périodique pour obtenir l'e-mail spécial émis par le premier dispositif.

Le document de brevet JP 10 023075 décrit un mécanisme dans lequel un premier dispositif communique une adresse IP provisoire par l'intermédiaire d'une station de base pour téléavertisseurs *(pager base station* en anglais) à un second dispositif lui-même disposant d'un téléavertisseur (pager en anglais).

La présente invention vise à la mise en communication, à travers un réseau informatique de transmission de données du genre de l'INTERNET, d'un équipement de transmission d'informations appelant avec un équipement homologue appelé dépourvu d'adresse permanente dans ce réseau.

A cet effet, l'invention concerne un procédé selon la revendication 1.

Ainsi, on intègre fonctionnellement le réseau informatique et les canaux de signalisation pour ainsi constituer un réseau de type téléphonique, c'est-à-dire dans lequel tout équipement peut être directement atteint. La mise en communication par le réseau informatique ne nécessite que l'utilisation préalable des canaux de signalisation sans impliquer l'établissement d'une communication proprement dite, si bien qu'une taxation éventuelle ne représentera qu'un coût limité.

On peut ainsi s'affranchir de tout serveur de rendez-vous et de toute entente préalable quant à une heure de rendez-vous, puisque les communications sont établies en temps réel.

Dans le cas où les deux équipements appartiennent à un réseau unique de transmission d'informations, l'appel de l'un par l'autre ainsi que la communication à travers le réseau informatique peuvent s'effectuer à travers le réseau unique.

On limite ainsi la complexité des équipements et les coûts d'abonnement.

Si les équipements appartiennent à au moins deux réseaux de transmission d'informations, l'appel de l'un par l'autre s'effectue à travers l'un des réseaux de transmission et la communication à travers le réseau informatique peut s'effectuer à travers le même réseau de transmission ou bien à travers un autre des réseaux de transmission.

Dans ce dernier cas, on peut ainsi utiliser des canaux de signalisation disponibles dans l'un des réseaux, comme le réseau GSM, et établir la communication à travers l'autre réseau s'il offre un moindre coût de communication ou un débit ou une qualité de transmission supérieur, par exemple le réseau téléphonique commuté ou le réseau RNIS.

L'invention sera mieux comprise à l'aide de la description suivante d'un mode de mise en oeuvre préféré du procédé de l'invention, en référence au dessin annexé, sur lequel :

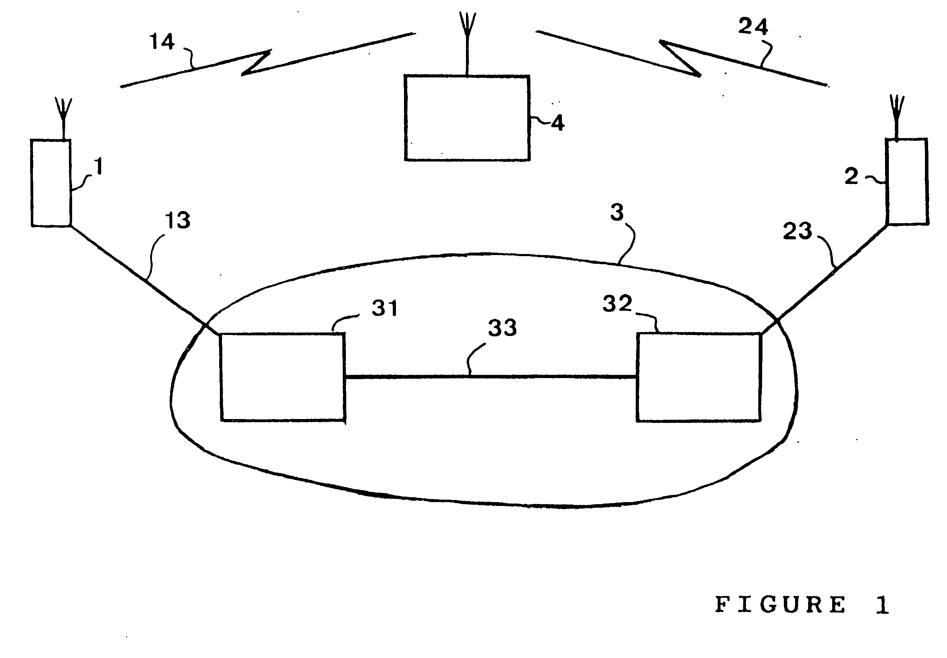

- la figure 1 représente schématiquement deux postes téléphoniques du réseau de radiotéléphonie cellulaire GSM, reliés à l'INTERNET, et
- la figure 2, formée des figures 2A et 2B, est un diagramme de cheminement illustrant les étapes du procédé.

Les équipements de transmission d'informations à mettre en communication sont, dans cet exemple, deux postes téléphoniques 1 et 2 reliés à un réseau direct de communication 4. Le mot "direct" indique que l'on peut atteindre immédiatement, de façon autonome, tout poste du réseau, c'est-à-dire sans l'aide d'un autre réseau ou sans rendez-vous. Il s'agit dans cet exemple du réseau de radiotéléphonie cellulaire GSM, auquel les postes mobiles 1 et 2 sont reliés par des liaisons radio respectives 14 et 24.

Le poste 1 est en outre relié à un réseau informatique de transmission de données, ici l'INTERNET 3. Comme, dans cet exemple, l'équipement 1 est un terminal et non pas un serveur, il n'est pas relié en permanence à l'INTERNET 3 et n'a donc pas d'adresse IP permanente. Le poste 1 est en fait relié par un connecteur à une ligne 13 du réseau téléphonique commuté lui permettant d'atteindre un fournisseur 31 de services d'accès à l'INTERNET 3. Les circuits de ligne RTC et d'échange de données avec l'INTERNET 3 sont ici intégrés au poste 1. En variante, ils pourraient être intégrés dans un boîtier reliant le poste 1 à la ligne 13. Le poste 1 pourrait en outre, en variante, être relié à la ligne 13 par une liaison sans fil, par exemple à travers une base radio du réseau domotique conforme à la norme DECT. De même encore, l'équipement 1 pourrait être relié par radio au fournisseur 31, de préférence ici par le réseau GSM, remplaçant alors la ligne 13. Si le fournisseur 31 n'était relié qu'au réseau RTC, et non au réseau GSM, un centre d'interfonctionnement pourrait alors être atteint par radio à travers le réseau GSM depuis le poste 1, pour convertir les signaux GSM émis par celui-ci en signaux de modem compatibles avec le réseau RTC, pour atteindre le fournisseur 31.

C'est le poste 2 qui sera appelé initialement et il n'a pas d'adresse IP permanente dans l'INTERNET 3. Le poste 2 est de même relié, par une ligne 23, à un fournisseur 32 de services d'accès, les variantes de raccordement exposées pour le poste 1 étant de même envisageables pour le poste 2.

La liaison 33 schématise le fait que les deux fournisseurs 31 et 32 peuvent s'appeler par l'INTERNET 3, pour relier les postes 1 et 2.

Le réseau GSM 4 comporte des canaux de signalisation permettant aux postes 1 et 2 d'échanger des informations sans établir de communication à travers une voie phonique, qui serait payante. En particulier, ils disposent à cet effet du Service de Messages Courts permettant d'échanger de courts paquets de données ou messages, appelés SMS, pour un coût restreint.

Dans leur utilisation classique, les messages SMS sont affichés sur le poste appelé.

On utilise ici ces messages SMS pour atteindre le poste appelé 2 depuis le poste appelant 1, afin de :
- l'informer de l'identité (adresse d'appel) du poste appelant 1 et
- lui commander de se connecter à l'INTERNET 3, et
- d'appeler en retour le poste appelant 1 par l'un des deux réseaux 3, 4, au moyen de l'identité reçue du poste appelant 1.

Si l'appel en retour est effectué par l'INTERNET 3, la communication est donc établie. Si par contre il est effectué par SMS, il sert alors à transmettre l'adresse provisoire IP2, affectée au poste appelé (2) lorsqu'il s'est connecté à l'INTERNET 3, et le poste appelant (1) peut ensuite utiliser celle-ci pour établir la communication voulue à travers l'INTERNET 3.

Ainsi, pour la mise en communication des deux postes 1, 2 à travers l'INTERNET 3, l'un des deux postes, appelant 1 et appelé 2, ayant appellé l'autre par un canal de signalisation SMS du réseau direct 4 en lui transmettant son adresse informatique IP1, IP2 dans le réseau INTERNET 3, il est à son tour appellé par l'autre poste 2, 1 mais par le réseau INTERNET 3 à l'adresse informatique transmise [P1, [P2.

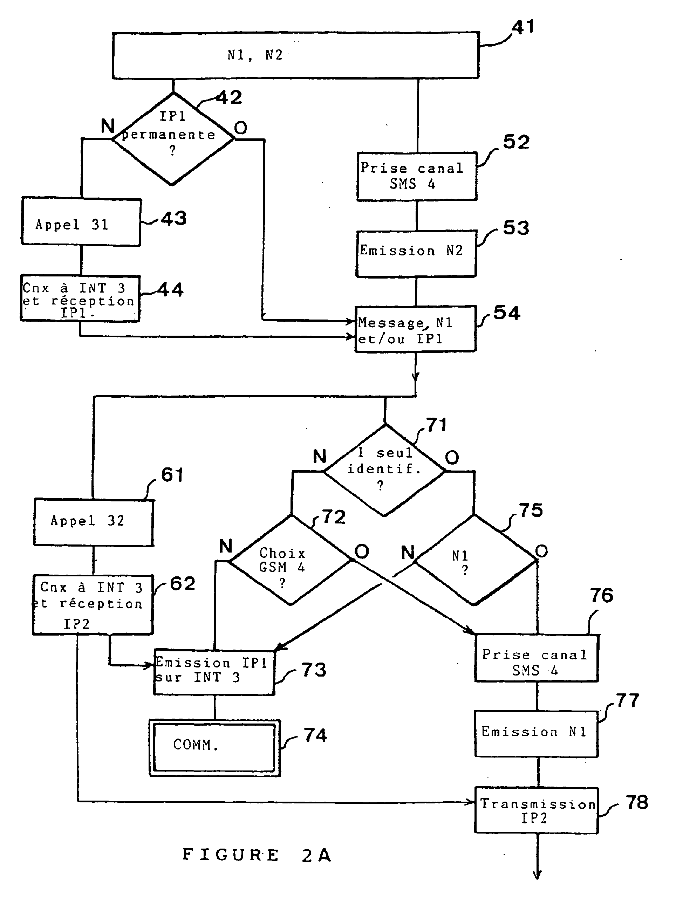

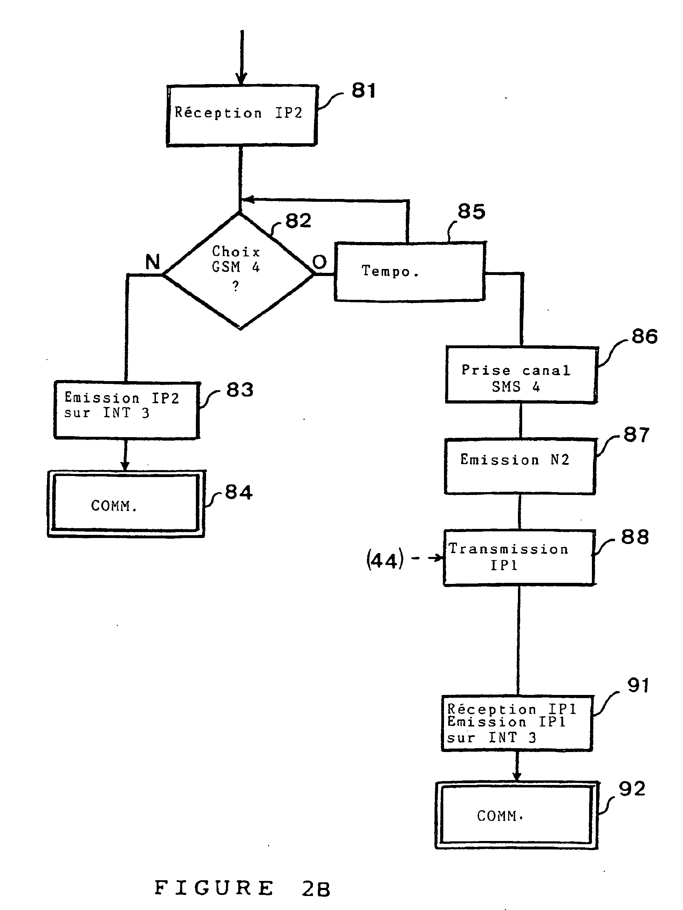

Le diagramme de cheminement de la figure 2 illustre les divers cas possibles pour établir la communication à travers l'INTERNET 3.

### Poste appelant 1, étapes 41 à 54

A une étape 41, on se procure deux numéros d'appel N1 et N2 pour les postes 1 et 2 respectifs dans le réseau GSM 4. Le poste 1, appelant, a éventuellement une adresse permanente INTERNET IP1 et le poste 2 appelé n'en a pas. Ce dernier, et, le cas échéant, le poste 1, pourra se procurer une adresse provisoire IP2 (IP1) auprès de son fournisseur 32 (31), qui assure en outre la connexion physique pour relier le poste 1, 2 considéré à l'INTERNET 3.

A une étape 42, on détermine si le poste appelant 1 dispose d'une adresse IP1 permanente et, dans la négative, on appelle, à partir de celui-ci, le fournisseur 31 par la ligne 13 à une étape 43 pour ainsi, à une étape 44, connecter ou relier le poste 1 à l'INTERNET 3 (connexion physique) et recevoir l'adresse provisoire IP1 requise (connexion logique).

Par ailleurs, à une étape 52, on prend un canal de signalisation SMS depuis le poste appelant 1 et, par émission du numéro d'appel N2 dans le réseau GSM 4 à une étape 53, on transmet, par le canal, au poste appelé 2, à une étape 54, un message :
- spécifiant que le poste 2 doit se connecter à l'INTERNET 3,
- fournissant un identifiant du poste 1 dans l'un au moins des réseaux 3 et 4. Cet identifiant peut être le numéro ou adresse d'appel N1 (qui existe dans tous les cas) ou l'adresse IP1, qui est permanente (réponse affirmative à l'étape 42) ou que le poste appelant 1 aura obtenuesi les étapes 42-44 ont été effectuées avant l'étape 54. Les adresses N1 et IP1 peuvent être transmises toutes les deux, dans un même message ou dans deux messages séparés, pour choisir le réseau de réponse, à une étape 72, dans le poste appelé 2.

### Poste appelé 2, étapes 61 à 78

A des étapes 61 et 62, qui suivent l'étape 54, et sont homologues des étapes 43, 44, le poste appelé 2 appelle son fournisseur 32, étape 61, pour se connecter à l'INTERNET 3 et recevoir une adresse provisoire IP2.

Par ailleurs, après l'étape 54, on détermine, à une étape 71, si le poste appelé 2 a reçu un seul identifiant (N1, IP1) du poste appelant 1. Dans la négative, ayant donc reçu N1 et IP1, on détermine, à l'étape 72, si on décide de choisir le réseau GSM 4 pour répondre au poste appelant 1. Ce choix peut dépendre de la façon qui est prévue de gérer la communication, pour des raisons d'exploitation (taxation ou autres). Dans la négative, le poste appelé 2, disposant de l'adresse IP1 du poste appelant 1, on émet à une étape 73 sur l'INTERNET 3, depuis le poste 2, un message de réponse comportant, outre une indication du fait qu'il s'agit d'une réponse à l'appel, l'adresse IP1. L'étape 73 suit l'étape 62 de connexion à l'INTERNET 3. Le message ainsi peut atteindre le poste appelant 1 et établir donc la communication voulue, à une étape 74. Un équipement (2) ainsi appelé peut par exemple transmettre à l'équipement appelant (1) des fichiers prédéterminés, par exemple une mise à jour d'une base de données de l'équipement appelant : fonction PUSH. En pratique, comme la communication est ici bidirectionnelle, le message de réponse comporte aussi l'adresse IP2, qui va permettre, au poste appelant 1, d'émettre lui aussi des messages de données utiles ou de la voix.

Dans l'affirmative à l'étape 71, un seul identifiant N1 ou IP1 ayant été reçu, on détermine, à une étape 75, si c'est N1. Dans la négative, IP1 ayant donc été reçu, on passe aux étapes 73-74 de mise en communication à travers l'INTERNET 3. Dans l'affirmative, à l'étape 72 (choix du réseau GSM 4) ou 75 (réception de N1), on prend, depuis le poste 2, un canal SMS à une étape 76, y émet N1 pour atteindre le poste appelant 1, à une étape 77, et lui transmet l'adresse IP2 obtenue à l'étape 62.

### Poste appelant 1, étapes 81 à 92

Après l'étape 78, le poste dit appelant 1 reçoit l'adresse provisoire IP2 à une étape 81 et, à une étape 82, on y détermine, pour des raisons semblables à celles de l'étape 72, si c'est le réseau GSM 4 qui va être choisi pour rappeler le poste appelé 2. Dans la négative, on émet l'adresse IP2 sur le réseau INTERNET 3, à une étape 83, ce qui établit la communication recherchée, à une étape 84. Si l'on veut, comme dans cet exemple, établir une communication bidirectionnelle, les étapes 42-44 auront, au besoin, été préalablement exécutées. En particulier, la branche affirmative de l'étape 82 comporte ici un rebouclage facultatif 85 permettant par exemple d'attendre la fin de l'étape 44, pour disposer de l'adresse IP1 et passer alors aux étapes 83-84 de l'établissement de la communication voulue à travers l'INTERNET 3. Sinon, l'étape 85 se poursuit par une étape 86 de prise d'un canal SMS pour joindre le poste appelé 2, par émission de son adresse N2, afin de lui transmettre l'adresse IP1, permanente ou acquise à l'étape 44.

### Poste appelé 2, étapes 91 et 92

Après l'étape 88, le poste appelé 2 reçoit l'adresse IP1 par un canal SMS, à une étape 91, et il l'émet alors sur l'INTERNET 3, ce qui établit la communication recherchée à travers l'INTERNET 3, à une étape 92.

On comprendra que le diagramme de la figure 2 vise à présenter tous les cas possibles et qu'il peut, en exploitation, être simplifié. En particulier, le résultat de l'étape 42 (adresse permanente ou non) est invariable pour un poste appelant déterminé et donc seule l'une des deux branches qui en découlent est parcourue.

Ainsi, par exemple encore, on peut supposer que le poste appelant 1 n'a pas d'adresse IP1 permanente et que les étapes 71 et 75 fournissent toujours une réponse affirmative et deviennent donc sans objet : on passe directement à l'étape 76 et les étapes 72 à 74 ne sont jamais effectuées.

De même, l'étape 82 peut fournir systématiquement une réponse négative et rendre sans objet les étapes 86 à 92. Parmi les trois étapes 74, 84, 92 de mise en communication à travers l'INTERNET 3, seule subsiste alors l'étape 84.

En pratique, chaque poste 1, 2 comporte un microprocesseur pour gérer automatiquement le protocole ci-dessus et pour, une fois la communication établie à travers l'INTERNET 3, avertir l'utilisateur considéré. Dans ce but, les étapes finales 74, 84, 92 sont suivies d'une étape de commande d'un buzzer des postes 1 et 2, avec éventuellement un message sur un afficheur du poste 1, 2, invitant l'utilisateur du poste à "décrocher" son poste 1, 2 pour prendre la communication et établir la transmission de voix ou données à travers la liaison INTERNET 3 ainsi établie. Ainsi, la mise en communication des postes 1, 2 par le réseau informatique 3 est de préférence effectuée de façon automatique par les microprocesseurs de ceux-ci et, ensuite, chaque poste 1, 2 actionne un avertisseur pour inviter l'utilisateur du poste 1, 2 considéré à prendre la communication. De ce fait, le temps pendant lequel se déroule le protocole ci-dessus d'établissement de la communication est masqué et l'utilisateur n'est ainsi pas dérangé lors des échanges ci-dessus de signalisations entre postes 1 et 2.

On conçoit que tout autre réseau, filaire ou sans fil, peut être substitué au réseau GSM 4, dans la mesure où il offre un chemin pour atteindre directement un équipement depuis tout autre, afin de télécommander l'équipement (ou informer son utilisateur) pour qu'il se connecte au réseau informatique 3.

Dans l'exemple détaillé ci-dessus du procédé selon l'invention, les équipements 1 et 2 mettant en oeuvre le procédé de communication décrit appartiennent en pratique à un unique réseau de transmission d'informations, c'est-à-dire le réseau téléphonique commuté associé RTC au réseau cellulaire GSM qui utilise l'infrastructure du réseau RTC. L'invention s'applique cependant également aux cas où les équipements 1 et 2 appartiendraient à différents réseaux de communication ou transmission d'informations. On peut ainsi par exemple songer aux divers réseaux téléphoniques i) filaires, y compris les réseaux câblés et les réseaux de transport et distribution d'énergie électrique, ou ii) radio, y compris les réseaux satellites ou cellulaires, ou par exemple le réseau DECT. En particulier, les divers réseaux téléphoniques, à intégration de services tels que le RNIS, et les réseaux cellulaires ou par satellites, présentent l'avantage de comporter des canaux de signalisation permettant une transmission des données de télécommande. Ces canaux transmettent des paquets d'informations ou datagrammes qui sont émis et reçus indépendamment de l'occupation de la voie téléphonique associée et peuvent donc être utilisés même lorsque celle-ci est occupée par une communication classique.

## Revendications

1. Procédé de mise en communication, à travers un réseau informatique (3), d'un premier et d'un second équipement de transmission d'informations pouvant accéder au réseau informatique (3) par des adresses informatiques respectives (IP1, IP2), le procédé comprenant une étape selon laquelle le premier équipement (1, 2) transmet, au second équipement, son adresse informatique (IP1, IP2) afin que ledit second équipement utilise ladite adresse informatique pour appeler ledit premier équipement afin de mettre en communication les premier et second équipements à travers ledit réseau informatique (3),
le procédé étant **caractérisé en ce que** le premier équipement transmet directement, au second équipement, ladite adresse informatique (IP1, IP2) via un canal (SMS) de signalisation d'un réseau direct de communication (4),

2. Procédé selon la revendication 1, **caractérisé en ce que** les premier et second équipements (1, 2) appartiennent à un unique réseau de transmission d'informations (4, 13), et **en ce que** l'étape selon laquelle le premier équipement transmet son adresse informatique et l'étape selon laquelle le second équipement appelle le premier équipement s'effectuent à travers l'unique réseau de transmission d'informations (4, 13).

3. Procédé selon la revendication 1, les premier et second équipements (1, 2) appartenant à au moins deux réseaux de transmission d'informations (4, 13), **caractérisé en ce que** l'étape selon laquelle le premier équipement transmet son adresse informatique s'effectue à travers l'un des réseaux de transmission (4, 13) et l'étape selon laquelle le second équipement appelle le premier équipement s'effectue à travers le même réseau de transmission (13).

4. Procédé selon la revendication 1, les premier et second équipements (1, 2) appartenant à au moins deux réseaux de transmission d'informations (4, 13), **caractérisé en ce que** l'étape selon laquelle le premier équipement transmet son adresse informatique s'effectue à travers l'un des réseaux de transmission (4) et l'étape selon laquelle le second équipement appelle le premier équipement s'effectue à travers un autre des réseaux de transmission (13).

5. Procédé selon l'une des revendications 1 à 4, un équipement parmi les premier et second équipements étant dit équipement appelant et l'autre étant dit équipement appelé, les équipements appelant et appelé disposant d'adresses directes d'appel (N1, N2) respectives pour accéder aux canaux (SMS) de signalisation du réseau direct de communication, **caractérisé en ce que** :
- l'équipement appelant (1) transmet d'abord (54) à l'équipement appelé (2), par un canal de signalisation (SMS) du réseau direct de communication, l'une au moins de ses adresses, d'appel (N1) et informatique (IP1),
- l'équipement appelé (2) se relie (61) au réseau informatique (3) afin d'obtenir (62) une adresse informatique provisoire (IP2) et
- l'équipement appelé (2) appelle l'équipement appelant à l'adresse (N1, IP1) que l'équipement appelant (1) a transmise et transmet ladite adresse informatique provisoire à l'équipement appelant.

6. Procédé selon la revendication 5, **caractérisé en ce que** l'équipement appelé (2) appelle (77) l'équipement appelant à l'adresse d'appel (N1) de l'équipement appelant (1) et lui transmet (78) l'adresse informatique provisoire (IP2).

7. Procédé selon la revendication 6, **caractérisé en ce que** l'équipement appelant (1) appelle (83) l'équipement appelé (2) par le réseau informatique (3) dès qu'il reçoit l'adresse informatique provisoire (IP2)transmise par l'équipement appelé (2).

8. Procédé selon la revendication 6, **caractérisé en ce que**, après réception (81) de l'adresse informatique (IP2) de l'équipement appelé (2), l'équipement appelant (1) transmet (88) son adresse informatique (IP1) à l'équipement appelé (2).

9. Procédé selon l'une des revendications 6 à 8, **caractérisé en ce que** en l'absence d'adresse informatique (IP1) permanente, l'équipement appelant (1) se procure (44) une adresse informatique (IP1) provisoire en se reliant (43) au réseau informatique (3), et la transmet (54), par un canal de signalisation (SMS) du réseau direct de communication, à l'équipement appelé (2).

10. Procédé selon l'une des revendications 6 à 9, **caractérisé en ce que** l'équipement appelé (2) appelle (73) l'équipement appelant (1) par le réseau informatique (3) dès qu'il reçoit (72, 75) l'adresse informatique provisoire (IP1) transmise par l'équipement appelant (1).

11. Procédé selon l'une des revendications 1 à 10, **caractérisé en ce que** les premier et second équipements (1, 2) se mettent automatiquement en communication par le réseau informatique (3) et, chacun des premier et second équipements (1, 2) actionne un avertisseur pour inviter un utilisateur de l'équipement considéré (1, 2) à prendre la communication.

12. Procédé selon l'une des revendications 1 à 11, **caractérisé en ce que** le premier équipement transmet directement, au second équipement, son adresse informatique par message de type SMS via un canal de signalisation d'un réseau direct de communication de type réseau de radiotéléphonie cellulaire GSM.

13. Procédé selon l'une des revendications 1 à 12, **caractérisé en ce que** le réseau informatique (3) est l'INTERNET.

## Claims

1. Method for placing in communication, via a computer network (3), first and second data transmission equipment able to access the computer network (3) by respective computer addresses (IP1, IP2), the method comprising a step according to which the first equipment (1, 2) transmits its computer address (IP1, IP2) to the second equipment, so that said second equipment uses said computer address to call said first equipment in order to place the first and second equipment in communication via said computer network (3),
the method being **characterized in that** the first equipment transmits said computer address (IP1, IP2) directly to the second equipment via a signalling channel (SMS) of a direct communication network (4).

2. The method according to claim 1, **characterized in that** the first and second equipment (1, 2) belong to a single data transmission network (4, 13), and **in that** the step according to which the first equipment transmits its computer address and the step according to which the second equipment calls the first equipment are performed via the single data transmission network (4, 13).

3. The method according to claim 1, the first and second equipment (1, 2) belonging to at last two data transmission networks (4, 13), **characterized in that** the step according to which the first equipment transmits its computer address is performed via one of the transmission network (4, 13) and the step according to which the second equipment calls the first equipment is performed via the same transmission network (13).

4. The method according to claim 1, the first and second equipment (1, 2) belonging to at least two data transmission network (4, 13), **characterized in that** the step according to which the first equipment transmits its computer address is performed via one of the transmission networks (4), and the step according to which the second equipment calls the first equipment is performed via another of the transmission networks (13).

5. The method according to any of claims 1 to 4, one equipment among the first and second equipment being denoted the calling equipment and the other being denoted the called equipment, the calling equipment and called equipment having respective direct call addresses (N1, N2) to access the signaling channel (SMS) of the direct communication network, **characterized in that**:
- the caning equipment (1) first transmits (54) to the called equipment (2), via a signalling chancel (SMS) of the direct communication network, at least of one its call (N1) and computer (IP1) addresses,
- the called equipment (2) connects (61) to the computer network (3) in order to obtain (62) a provisional computer address (IP2), and
- the called equipment (2) calla the calling equipment at the address (N1, IP1) which the calling equipment (1) has transmitted, and transmits said provisional computer address to the calling equipment.

6. The method according to claim 5, **characterized in that** the called equipment (2) calls (77) the casting equipment at the call address (N1) of the calling equipment (1) and transmits (78) thereto the provisional computer address (IP2).

7. The method according to claim 6, **characterized in that** the calling equipment (I) calls (83) the called equipment (2) via the computer network (3) as soon as it receives the provisional computer address (IP2) transmitted by the called equipment (2).

8. The method according to claim 6 **characterized in that**, after receiving (81) the computer address (IP2) of the called equipment (2), the calling equipment (1) transmits (88) its computer address (IP1) to the called equipment (2).

9. The method according to any of claims 6 to 8, **characterized in that** in the absence of any permanent computer address (IP1), the calling equipment (1) obtains (44) a provisional computer address (IP1) by connecting (43) to the computer network (3) and transmits (54) the same, via a signalling channel (SMS) of the direct communication network, to the called equipment (2).

10. The method according to any of claims 6 to 9, **characterized in that** the called equipment (2) calls (73) the calling equipment (1) via the computer network (3) as soon as it receives (72, 75) the provisional computer address (IP1) transmitted by litre calling equipment (1).

11. The method according, to any of claims to 10, **characterized in that** the first and second equipment (1, 2) automatically place themselves in communication via the computer network (3), and each of the first and second equipment (1, 2) actuate an alert to invite a user of the equipment under consideration (1,2) to take the communication.

12. The method according to any of claims 1 to 11, **characterized in that** the first equipment directly transmits its computer address to the second equipment by message of SMS type via a signalling channel of a direct communication network of GSM cellular radio telephony type.

13. The method according to any of claims 1 to 12, **characterized in that** the computer network (3) is the INTERNET.

## Patentansprüche

1. Verfahren zum Aufbau einer Verbindung über ein Computernetzwerk (3) zwischen einer ersten und einer zweiten Einrichtung zur Übertragung von Informationen, die durch entsprechende Computeradressen (IP1, IP2) auf das Computernetzwerk zugreifen können, wobei das Verfahren einen Schritt umfasst, nach dem die erste Einrichtung (1, 2) an die zweite Einrichtung ihre Computeradresse (IP1, IP2) überträgt, damit die zweite Einrichtung die Computeradresse verwendet, um die erste Einrichtung anzurufen, um zwischen der ersten und der zweiten Einrichtung über das Computernetzwerk (3) eine Verbindung aufzubauen,
wobei das Verfahren **dadurch gekennzeichnet ist, dass** die erste Einrichtung direkt an die zweite Einrichtung die Computeradresse (IP1, IP2) über einen Kanal (SMS) zur Signalisierung eines direkten Verbindungsnetzes (4) Überträgt.

2. Verfahren nach Anspruch 1, **dadurch gekennzeichnet, dass** die erste und die zweite Einrichtung (1, 2) einem einzigen Netzwerk zur Übertragung von Informationen (4, 13) angehört, und **dadurch**, dass der Schritt, nach dem die erste Einrichtung ihre Computeradresse überragt, und der Schritt, nach dem die zweite Einrichtung die erste Einrichtung anrufe, über das einzige Netzwerk zur Übertragung von Informationen (4, 13) erfolgt.

3. Verfahren nach Anspruch 1, wobei die erste und die zweite Einrichtung (1, 2) mindestens zwei Netzwerken zur Übertragung von Informationen (4, 13) angehören, **dadurch gekennzeichnet, dass** der Schritt, nach dem die erste Einrichtung ihre Computeradresse überträgt, über eines der Übertragungsnctzwerke (4, 12) erfolgt, und der Schritt, nach dem die zweite Einrichtung die erste Einrichtung anrufe, über das gleiche Übertragungsnetzwerk (13) erfolgt.

4. Verfahren nach Anspruch 1, wobei die erste und die zweite Einrichtung (1, 2) mindestens zwei Netzwerken zur Übertragung von Informationen (4, 13) angehören, **dadurch gekennzeichnet, dass** der Schritt, nach dem die erste Einrichtung ihre Computeradresse überträgt, über eines der Übertragungsnetzwerke (4) erfolgt, und der Schritt, nach dem die zweite Einrichtung die erste Einrichtung anrufe, über ein anderes der Übertragunssnetzwerke (13) erfolgt.

5. Verfahren nach einem der Ansprüche 1 bis 4, wobei eine Einrichtung unter der ersten und der zweiten Einrichtung als anrufende Einrichtung und die andere als angerufene Einrichtung bezeichnen wird, wobei die anrufende und die abgerufene Einrichtung über jeweilige direkte Anrufadressen (N1, N2) verfügen, um auf die Kanäle (SMS) zur Signalisierung des direkten Verbindungsnetzwerks (4) zuzugreifen, **dadurch gekennzeichnet, dass**
- die anrufende Einrichtung (1) zunächst (54) an die angerufene Einrichtung (2) durch einen Kanal zur Signalisierung (SMS) des direkten Verbindungsnetzwerks mindestes eine ihrer Adressen, der Anruf (N1)- und der Computeradresse (IP1), überträgt;
- die angerufene Einrichtung (2) sich mit dem Computernetzwerk (3) verbindet (61), um eine provisorische Computeradresse (IP2) zu erhalten (62), und
- die angerufene Einrichtung (2) die anrufende Einrichtung an der Adresse (N1, IP1) anruft, die die anrufende Einrichtung (1) übertragen hat, und die provisorische Computeradresse an die anrufende Einrichtung überträgt.

6. Verfahren nach Anspruch 5, **dadurch gekennzeichnet, dass** die angerufene Einrichtung (2) die anrufende Einrichtung an der Anrufadresse (N1) der anrufenden Einrichtung (1) anruft (77) und die provisorische Computeradresse (IP2) überträgt (78).

7. Verfahren nach Anspruch 6, **dadurch gekennzeichnet, dass** die anrufende Einrichtung (1) die angerufene Einrichtung (2) durch das Computernetzwerk (3) anruft (83), sobald sie die provisorische Computeradresse (IP2), überragen durch die angerufene Einrichtung (2), erhält.

8. Verfahren nach Anspruch 6, **dadurch gekennzeichnet, dass**, nach dem Erhalt (81) der Computeradresse (IP2) der angerufenen Einrichtung (2), die anrufende Einrichtung (1) ihre Computeradresse (IP1) an die angerufene Einrichtung (2) überträgt.

9. Verfahren nach einem der Ansprüche 6 bis 8, **dadurch gekennzeichnet, dass** bei Abwesenheit einer ständigen Computeradresse (IP1) sich die anrufende Einrichtung (1) eine provisorische Computeradresse (IP1) verschafft (44), in dem sie sich mit dem Computernetzwerk (3) verbindet (43), und sie durch einen Kanal zur Signalisierung (SMS) des direkten Verbindungsnetzwerks an die angerufene Einrichtung (2) überträgt (54).

10. Verfahren nach einem der Ansprüche 6 bis 9, **dadurch gekennzeichnet, dass** die angerufene Einrichtung (2) die anrufende Einrichtung (1) durch das Computernetzwerk (3) anruft (73), sobald sie die provisorische Computeradresse (IP1), übertragen durch die anrufende Einrichtung (1) erhält (72, 75).

11. Verfahren nach einem der Ansprüche 1 bis 10, **dadurch gekennzeichnet, dass** die erste und die zweite Einrichtung (1, 2) automatisch durch das Computernetzwerk (3) eine Verbindung aufbauen und sowohl die erste als auch die zweite Einrichtung (1, 2) eine Meldevorrichtung betätigt, um einen Benutzer der in Betracht, gezogenen Einrichtung (1, 2) dazu aufzufordern, die Verbindung anzunehmen.

12. Verfahren nach einem der Ansprüche 1 bis 11, **dadurch gekennzeichnet, dass** die erste Einrichtung direkt an die zweite Einrichtung ihre Computeradresse durch eine Mitteilung des Typs 5MS über einen Kanal zur Signalisierung eines direkten Verbindungsnetzwerks des Typs zelluläres Funknetz (GSM) überträgt.

13. Verfahren nach einem der Ansprüche 1 bis 12, **dadurch gekennzeichnet, dass** das Computernetwerk (3) das INTERNET ist.
